# EUROPEAN PATENT SPECIFICATION

(11) **EP 2 312 792 B1**
(45) Date of publication and mention of the grant of the patent: **11.10.2017**
(21) Application number: 09802383.1
(22) Date of filing: 10.07.2009
(51) Int. Cl.: H04L 12/24, H04L 12/703, H04L 12/707

(54) **PROTECTION PROTOCOL DEVICE FOR NETWORK NODE AND METHOD FOR PROCESSING PROTECTION SWITCHING THEREOF**
SCHUTZPROTOKOLLVORRICHTUNG FÜR NETZWERKKNOTEN UND VERFAHREN ZUR SCHUTZSCHALTUNGSVERARBEITUNG DAFÜR
DISPOSITIF À PROTOCOLE DE PROTECTION DESTINÉ À UN N UD DE RÉSEAU ET PROCÉDÉ SERVANT À TRAITER LA COMMUTATION DE PROTECTION DU DISPOSITIF

(30) Priority: 22.07.2008 CN 200810142639
(43) Date of publication of application: 20.04.2011
(73) Proprietor: ZTE Corporation, Shenzhen, Guangdong 518057 (CN)
(72) Inventor: LUO, Yajun, Shenzhen Guangdong 518057 (CN)
(74) Representative: Appleyard Lees IP LLP
(86) International application number: PCT/CN2009/072718
(87) International publication number: WO 2010/012190

(56) References cited:
- CN-A- 1 567 805
- CN-A- 101 075 935
- CN-A- 101 095 058
- CN-A- 101 217 443
- CN-A- 101 325 599
- US-A1- 2002 159 392
- US-A1- 2003 043 736
- US-A1- 2008 095 047
- US-A1- 2009 147 672
- US-B1- 7 277 631

## Description

### Technical Field

The present invention relates to the field of optical communication technology, and more especially, to a protection protocol device for network node and method for processing protection switching to shorten the processing time of the protection switching in ring network.

### Background of the Related Art

With the development of optical communication technology, there are more and more applications adopting optical fiber to bear the network service transmission. However, abnormal situations, such as fiber broken and equipment power off, which will affect the service transmitting in the optical fiber, are inevitable, in order to improve the reliability and security of transmission, for the case that the service transmission is affected, I-TUT (International Telecommunication Unit Telecom) offers standard protection switching mechanisms (such as G.841, G.783 and G.808), so as to make sure that resources such as the optical fiber in the network or the equipments will be switched automatically to their backups to ensure normal transmission when there is abnormal situation.

Generally, the present protection networking structure usually adopts ring network structure in which several network devices are connected to form a ring network through the optical fiber, and when a device or a section of optical fiber in the ring network is broken, the establishment of protection switching is implemented by transmitting a set of standard protection signalings among the other devices. In order to guarantee the timeliness of the protection switching, the standard also specifies the processing time of protection switching and requires that the processing time of switching is less than 50ms for the ring network structure in the case that a single section has fault, and there is no extra service in the ring, and all nodes are in idle state (that is, no fault, active automatic command or external command is detected, and only NULL protection signaling is received), and the length of the optical fiber is less than 1200km.

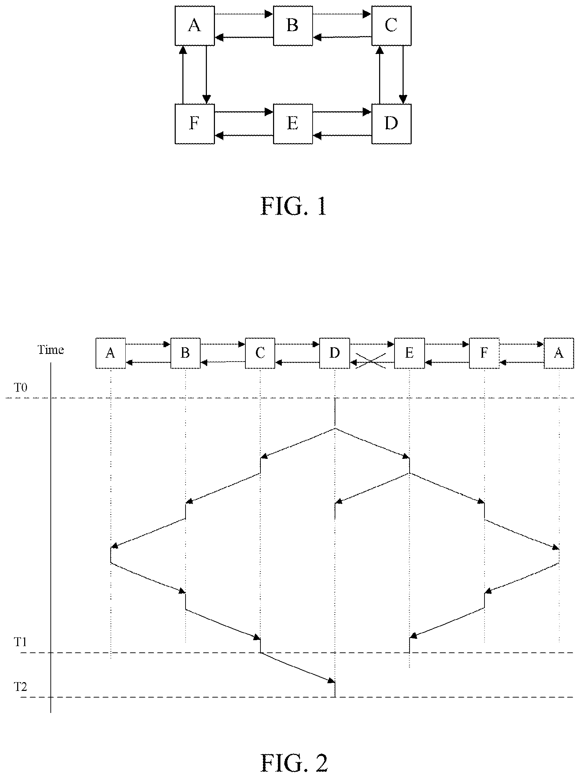

For a ring network structure shown in FIG. 1, when there is a fault between network node D and node E, the procedure of the protection switching processing is as follows: node D detects the fault firstly and sends a protection signaling of switching request to node E in both directions, and after node E receives the protection signaling request from the short path sent by node D (the direction in which the fault happens), it also sends a protection signaling for bridging switching or reverse request to node D in both directions, and after node E receives the protection signaling for bridging switching request from the long path sent by node D (the direction opposite to the one in which the fault happens) and the bridging switching of the local node is completed, after node D receives the switching signaling sent by node E from the long path, the bridging switching of the local node is completed, and after other intermediate nodes receive the protection information of the long path, the state of bidirectional pass is entered as shown in FIG. 2. From the above-mentioned switching process, it can be seen that the processing time of protection switching mainly depends on T1 (i.e. the processing time from node D sending the long path switching signaling to node E completing the bridging switching) and T2 (i.e. the total processing time from node D sending the short path switching signaling to node E sending long path switching signaling to node D completing the bridging switching), and since the long path switching and short path switching in both directions can be generally processed in parallel, the processing time of switching mainly depends on T2.

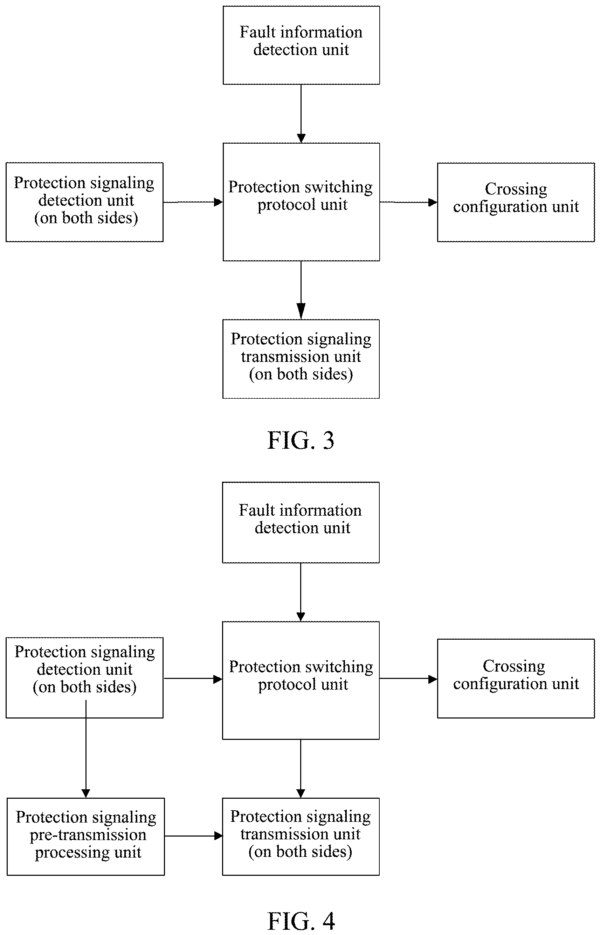

The model of the protection protocol device of a single network node is shown in FIG. 3, and the device is mainly composed of: (1) a fault information detection unit, which is used to detect whether there are new alarms generated on both sides of the network element node or not and, if yes, send the fault to the protection switching protocol unit to perform protocol calculation; (2) a protection signaling detection unit, which is used to detect whether there are new protection signaling bytes generated on both sides of the network element nodes or not and, if yes, send the bytes to the protection switching protocol unit to perform protocol calculation; (3) a protection switching protocol unit, which is used to apply a standard protection protocol algorithm to calculate the local network situation according to the input alarm and protection signaling information, and output the state of the local network element node and the protection signaling bytes which should be sent; (4) a protection signaling transmission unit, which is used to transmit the protection signaling bytes output by the protection protocol unit to other network element nodes; (5) a crossing configuration unit, which is used to perform the specific service crossing configuration according to the state of the local network element node output by the protection switching protocol unit. Suppose the difference between the processing time of the above units in each network element node is not so large, the above-mentioned T2 can be subdivided into: 1*the processing time of the fault information detection unit + 6*the processing time of the protection signaling detection unit + 7*the processing time of the protection protocol unit + 6*the processing time of the protection signaling transmission unit + 1*the processing time of the crossing configuration unit, and extending to the case of N nodes, it can be seen that:
The processing time of the switching of N nodes = 1* the processing time of the fault information detection unit + N*(the processing time of the protection signaling detection unit + the processing time of the protection signaling transmission unit) + (N+1)*the processing time of the protection switching protocol unit + 1*the processing time of the crossing configuration unit.

Nowadays, the processing time of the protection protocol unit is generally about 3 ms (millisecond), and can be even as high as 3 to 6 ms when the hardware configuration (such as CPU frequency) is not high. The processing of the protection signaling detection and transmission units is relatively simple, and the processing time is generally much lower than 1 ms. Therefore, in the case that there are a lot of network nodes (16 nodes are supported at most in the present standard), the processing time of protection switching by the protection protocol unit is (16+1)*(3∼6)=51∼102 ms, and there is a big processing bottleneck. Considering the factor of hardware transmission, for example, it takes at least 6 ms for the signaling information transmitting in a 1200km optical fiber, and the processing time of switching probably cannot meet the standard requirements.

It can be seen that there are some problems in the prior art which need to be fixed. The features of the preamble of the independent claims are known from US7277631B1.

### Content of the Invention

The target of the present invention is to offer a protection protocol device for network nodes and a method for processing protection switching as defined in the independent claims, to improve the processing efficiency of the protection switching and to ensure that the processing time of ring network protection switching meets the requirements specified in the standards.

In order to achieve the above-mentioned target, the present invention applies the following technical scheme:
The present invention offers a protection protocol device for network nodes, and said protection protocol device comprises: a protection switching protocol unit to perform protection protocol calculation, a fault information detection unit to detect the alarm information generated on both sides of the network element nodes, a protection signaling detection unit to detect the first protection signaling generated on both sides of the network element nodes, a protection signaling transmission unit to transmit the protection signaling to other network element nodes, and a crossing configuration unit to perform service crossing configuration according to the state of the local network element node; said protection protocol device also comprises: a protection signaling pre-transmission processing unit which respectively connects with said protection signaling detection unit and said protection signaling transmission unit, and said protection signaling pre-transmission processing unit is used to perform the pre-transmission judgment for the first protection signaling received by said protection signaling detection unit, and said protection signaling transmission unit forwards said first protection signaling which needs to be pre-transmitted to other network element nodes.

In said device, wherein, said first protection signaling which needs to be pre-transmitted should meets all the following conditions: the first protection signaling is a valid signaling, the long/short path ID (identifier) indicated in the first protection signaling shows that it is the long path, and the source node or the destination node ID indicated in the first protection signaling shows that the source node or the destination node is not the local node, and the bridging switching request indicated in the first protection signaling is a valid bridging switching request, and the priority of the bridging switching request indicated in the first protection signaling is higher than that of the bridging switching request indicated in the protection signaling transmitted by the local node in the forwarding process.

In said device, wherein, the direction in which the local node sends said first protection signaling in the forwarding process is opposite to the direction in which said first protection signaling is received.

The present invention also offers a method for processing the network node protection switching, and said method comprises the following steps:
A. The local node detects and receives the first protection signaling generated on both sides of the network element nodes;
B. Pre-transmission judgment is performed for the received first protection signaling, and if said first protection signaling needs to be pre-transmitted, the first protection signaling is sent to the protection signaling transmission unit of the local node, and is forwarded to the other network element nodes by said protection signaling transmission unit;
C. the received first protection signaling is sent to the protection switching protocol unit of the local node to perform the protocol calculation, to generate the state information of the local node and the second protection signaling which needs to the sent by the local node;
D. Said second protection signaling is transmitted by said protection signaling transmission unit to other network element nodes, and the state information of the local node is sent to the crossing configuration unit to perform service crossing configuration.

In said method, wherein, in said step B, said received first protection signaling is taken as the protection signaling to be sent in the direction opposite to the receiving direction and is forwarded by said protection signaling transmission unit to other network element nodes.

In said method, wherein, in said step B, said first protection signaling which needs to be pre-transmitted needs to meet all the following conditions: said first protection signaling is a valid signaling, the long/short path ID indicated in said first protection signaling shows that the path is the long path, the source node or the destination node ID indicated in said first protection signaling shows that the source node or the destination node is not the local node, and the bridging switching request indicated in said first protection signaling is a valid bridging switching request, and the priority of the bridging switching request indicated in the first protection signaling is higher than that of the bridging switching request indicated in the protection signaling transmitted by the local node in the forwarding process.

In said method, wherein, the direction in which said local node sends said first protection signaling in the forwarding process is opposite to the direction in which the first protection signaling is received.

In the present invention, the beneficial effect is that, in the establishment of the ring network protection switching, for the intermediate nodes except the network nodes in which the fault occurs, firstly, the protection signaling is sent and then the protection protocol is calculated so that the protocol calculation of the intermediate nodes can be performed in parallel, thus to shorten the processing time of the protection switching protocol unit of the intermediate nodes and to improve the processing efficiency of the protection switching.

### Brief Description of Drawings

FIG. 1 is a typical ring network structure;
FIG. 2 illustrates the general process of ring network protection switching;
FIG. 3 illustrates the model structure of the protection protocol device of the network nodes in the prior art;
FIG. 4 illustrates the structure of the protection protocol device of the network nodes in accordance with the present invention;
FIG. 5 illustrates the improved process of the ring network protection switching in accordance with the present invention;
FIG. 6 is a flow chart of the process of protection switching in accordance with the present invention.

### Preferred Embodiments of the Present Invention

The technical scheme of the present invention will be described in detail with combination of the accompanying figures.

Based on the improvement idea of the intermediate nodes transmitting the protection signaling and then calculating the protection protocol as show in FIG. 4, the present invention offers a protection protocol device for the network nodes, and said protection protocol device comprises the following components:
(1) A protection switching protocol unit, which is used to apply a protection protocol algorithm to calculate the present network situation according to the input alarm information of the local node and the first protection signaling and to output the state information of the local node and the second protection signaling which needs to be sent by the local node;
(2) A fault information detection unit, which is used to detect the alarm information generated on both sides of the network element nodes and send the alarm information to the protection switching protocol unit to perform protocol calculation;
(3) A fault information detection unit, which is used to detect said first protection signaling generated on both sides of the network element nodes and to send said protection signaling to said protection switching protocol unit to perform protocol calculation;
(4) A protection signaling transmission unit, which is used to transmit the second protection signaling output by the protection switching protocol unit to other network element nodes;
(5) A crossing configuration unit, which is used to perform service crossing configuration according to the state information of the local network element node output by the protection switching protocol unit;
(6) A protection signaling pre-transmission processing unit, wherein, the unit respectively connects with the protection signaling detection unit and the protection signaling transmission unit, and the unit is used to perform pre-transmission judgment for the first protection signaling received by said protection signaling detection unit and said protection signaling transmission unit forwards the first protection signaling which needs to be pre-transmitted to other network element nodes.

On the above description, in order to distinguish different protection signaling, different IDs are added on the names, such as "the first protection signaling" is the protection signaling received by the local node, "the second protection signaling" is the one of the results of protocol calculation by the protection switching protocol unit of the local node according to the first protection signaling, and in the following these names are used uniformly to distinguish. The present invention is mainly designed for the first protection signaling, and from FIG. 4, it can be seen that, in the present invention, a protection signaling pre-transmission processing unit is added into the structure of the present protection protocol device for the existing network nodes, firstly, the protection signaling detection unit sends the received first protection signaling to the protection signaling pre-transmission processing unit for processing when detecting a signaling change, and then the protection signaling pre-transmission processing unit determines whether a protection signaling needs to be pre-transmitted, and if yes, the protection signaling is sent directly to the protection signaling transmission unit to be sent, otherwise, no processing is performed. After processed by the protection signaling pre-transmission processing unit, the received first protection signaling is sent by the protection signaling detection unit to the protection protocol unit to be processed according to the original procedure, the second protection signaling is generated and sent by the protection signaling transmission unit to other network element nodes.

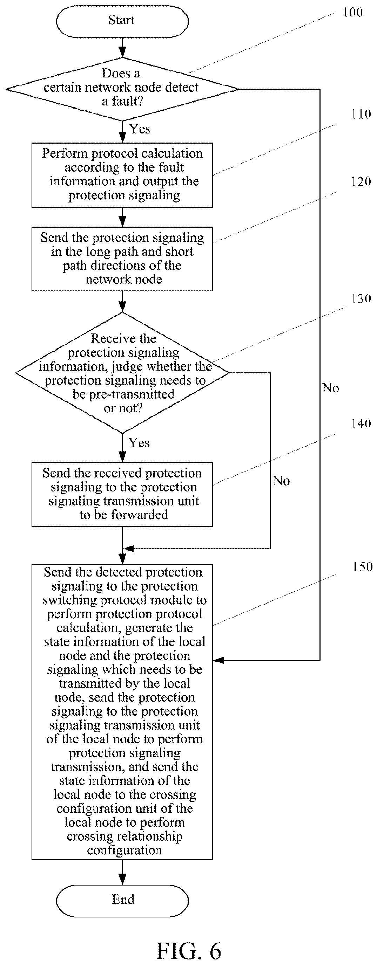

Based on the structure shown in FIG. 4, the present invention correspondingly modifies the method for processing the protection switching, as shown in FIG. 6.
Step 100, the fault information detection unit of the nodes in the ring network detects whether there is alarm information generated on both sides on the network element nodes or not, and when the fault information detection unit of a certain node in the ring network detects a fault, it sends the alarm information of the fault to the protection switching protocol unit of the local node, otherwise, the detection is terminated;
Step 110, the protection switching protocol unit performs the protocol calculation according to the state of the local node and the fault information and outputs the new protection signaling information to the protection signaling transmission unit;
Step 120, the protection signaling transmission unit sends the signaling information including the protection switching request in both long path and short path directions according to the new generated protection signaling.
Step 130, the protection signaling detection units of other nodes in the network detect the protection signaling generated on both sides of the network element nodes. When the protection signaling detection unit of an intermediate node detects the protection signaling sent by the above-mentioned node, it receives the protection signaling and takes it as the first protection signaling defined above, and firstly sends it to the protection signaling pre-transmission processing unit of the local node, and the protection signaling pre-transmission processing unit judges whether the first protection signaling needs to be pre-transmitted or transmitted or not, and if yes, proceeding to step 140, otherwise, no processing is performed and proceeding to step 150.
Step 140, the protection signaling transmission unit of the local node pre-transmits, i.e. forwards, the first protection signaling received by the local node to other network element nodes. In this step, when pre-transmitting the protection signaling, the first protection signaling received by the local node is the protection signaling sent in the direction opposite to the receiving direction, and the protection signaling transmission unit of the local node forwards this protection signaling to other network element nodes.
Step 150, the protection signaling detection unit sends the detected first protection signaling to the protection switching protocol module to perform protection protocol calculation, and generates the state information of the local node and the second protection signaling to be sent by the local node, and then sends the second protection signaling to the protection signaling transmission unit of the local node to perform protection signaling transmission, and sends the state information of the local node to the crossing configuration unit of the local node to perform the crossing relationship configuration.

From the above process, it can be seen that step 100 to step 120 and step 150 are the regular procedures, and step 100 to step 120 indicate the process of generating the initial protection signaling including the protection switching request, that is, the process of generating the protection signaling source node. The target of the present invention is to add a step of protection signaling pre-processing judgment between step 120 and step 150, and this judgment step is completed by the intermediate nodes in the ring network. The step of pre-processing judgment is used to judge whether the protection signaling received by the intermediate nodes needs to be pre-processed or not, that is, judge whether the protection signaling received by the local node meets the forwarding condition or not, and if yes (i.e. the forwarding condition is satisfied), firstly, the first protection signaling including the protection switching request is sent to other network element nodes, and then the protection protocol calculation for the received first protection signaling is performed in the local node to complete the bridging switching of the local node, thus to make the protection switching request and the protocol calculation of the local node performed in parallel, shorten the processing time of the protection protocol in the intermediate nodes, and in overall improve the processing efficiency of the ring network protection switching. According to different network faults, a certain node can be the source node or an intermediate node of the protection signaling, thus each node in the ring network can has the structure shown in FIG. 4.

A pre-transmission judgment process is mentioned above and the process judges whether the first protection signaling received by the local node meets the forwarding conditions or not, and herein, the forwarding conditions comprise:
Condition 1: the received protection signaling is a valid signaling;
Condition 2: the long/short path ID indicated in the received protection signaling shows that the path is the long path;
Condition 3: the received protection signaling indicates the source node or the destination node is not the local node;
Condition 4: the received protection signaling indicates that the bridging switching request is a valid bridging switching request and its priority is higher than that of the bridging switching request indicated in the protection signaling sent by the local node during the forwarding process. If the above four conditions are met, the signaling is judged as a protection signaling to be pre-transmitted. From the description of the above step 140, it can be seen that the direction in which the local node sends the protection signaling during the forwarding process is opposite to the direction in which said first protection signaling is received.

In the following, the SDH (Synchronous Digital Hierarchy) multiplex section share protection ring is taken as an example to illustrate the implementation of the present invention.

The specifications G.841 and G.842 published by the I-TUT specify the protocol algorithm of the SDH multiplex section two/four-fiber share protection ring. Wherein, for the multiplex section two fiber share protection ring, each section in the ring has two optical fibers. Each fiber can bear both the operation channels and the protection channels. A half of channels born in each optical fiber are defined as the operation channels, and the other half are defined as the protection channels. The normal services born on the operation channels of one optical fiber are protected by the protection channels transmitting in the opposite direction on the ring; for the multiplex section four-fiber share protection ring, there are four optical fibers in each section on the ring, and the operating and protection channels are born by different optical fibers: two multiplex sections in the opposite directions bear operation channels, and the other two multiplex sections in the opposite directions bear the protection channels. The protection signaling applies the bytes K1 and K2 in the SDH frame structure to transmit, and K1 comprises the protection switching request and destination node ID and K2 comprises the source node ID and the node state, and for the four-fiber ring, K1/K2 information is only transmitted in the protection channel, wherein, the node states comprise: idle state (there is no switching request or bridging request generated or received, and NULL code or ET code is received in both directions), pass state (when the switching request with the highest priority does not take the local node as the target one or is not bridging request sent by the local node or the state of bridging request), and switch state (when a node is not in idle state or pass state).

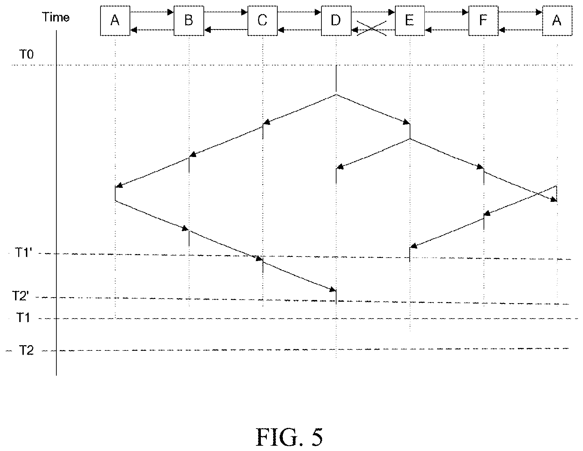

With the present invention, each node adopts the structure shown in FIG. 4 to perform the cross-ring switching of the multiplex section two/four-fiber share protection ring, and the implementation steps will be illustrated in the following with combination of FIG. 5:
Step 1: node D in the multiplex section two/four-fiber share protection ring network detects fault information and sends it to the protection switching protocol unit of node D;
Step 2: the protection switching protocol unit of node D performs protocol calculation according to the fault information and the present state and outputs the byte K1/K2 including the present bridging and switching request to the protection signaling transmission unit of the local node;
Step 3: the protection signaling transmission unit of node D sends the byte K information of the protection switching request in the long path and short path directions according to byte K1/K2;
Step 4: when other nodes such as intermediate nodes E and F in the network receives the byte K information, they send it to the protection signaling pre-transmission processing unit of the local node;

The protection signaling pre-transmission processing unit judges whether the byte K protection signaling needs to be pre-transmitted or not, that is, judges whether the above forwarding conditions is satisfied or not, and if the pre-transmission is needed, the received byte K protection signaling is taken as the byte K sent in the opposite direction of the receiving one and is sent to the protection signaling transmission unit of the local node to send to the corresponding optical fiber, so as to implement the forwarding function of other network element nodes; if the pre-transmission is not needed, no further processing is performed.

In this step, the conditions to determine whether the byte K protection signaling including the K1/K2 byte information needs to be transmitted in advance are:
Condition 1: the received K1/K2 information is valid information, and the specific valid information comprises: not all 0 information, not all I information, the destination network element ID indicated by K1 shows that it is in this multiplex section protection group, the source network element ID indicated by K2 shows that it is in the multiplex section protection group, and for the 4-fiber ring, the K1/K2 is the information received through the protection optical fiber.
Condition 2: Bit 5 in the received byte K2 indicates that it is long path 1.
Condition 3: The destination node ID in the received byte K1 is not the ID of node E of the local network element, and the node ID of the source network element in the received byte K2 is not the ID of node E of the local network element.
Condition 4: the bridging switching request indicated in the received byte K1 is the bridging switching request above the practice switching request, and its priority is higher than that of the bridging switching request of K1 sent in the direction opposite to the direction of receiving the byte K1.
   If the above four conditions are met, the signaling is judged as a protection signaling which needs to be pre-transmitted.
Step 5: the protection signaling detection unit of the above-mentioned intermediate node sends the detected and changed byte K information to the protection switching protocol module of the local node to calculate, and according to the calculation result (such as the state of the local node and the sent byte K1/K2 byte), sends the new byte K1/K2 information to the protection signaling transmission unit of the local node to perform the new byte K1/K2 transmission, and after that, the state of the local node (such as pass/idle/switch) is sent to the crossing configuration unit to complete the crossing relationship configuration of the local node.

As shown in FIG. 5, when there is a fault between node D and node E, it can be seen from the above-mentioned switching process that the processing time of switching in the present invention mainly depends on T**1**' and T2', and this T1' is the processing time of node D sending the long path switch signaling to node E completing the bridging switching, and this T2' is the processing time of node D sending short path switching signaling to node E sending the long path switching signaling and to node D completing the bridging switching. Compared with the prior art, it is evident that T1' in FIG. 5 is less than T1 in FIG. 2, and T2' in FIG. 5 is less than T2 in FIG. 2. It can be seen that the method and device of the present invention surely improve the processing efficiency of ring network switching and shorten the processing time.

To sum up, in the present invention, by adding a protection signaling pre-transmission processing unit on the basis of not changing the existing network node model, the processing time of ring network protection switching in the optical network is shortened effectively and the processing efficiency of ring network protection switching of the optical network device is largely improved. In the present invention, the implementation method and device structure cab be constructed on the basis of the hardware of the existing network element nodes by means of software programming. The present invention is especially suitable to the field of ring network protection technology, and also can be extended to the field of protection process in other networks which are similar to ring network.

The illustration of the above-mentioned steps is relatively specific and cannot be considered as limiting the scope of the present invention, and the scope of the present invention is only defined by the appended claims.

### Industrial Applicability

In the present invention, by adding a protection signaling pre-transmission processing unit on the basis of not changing the existing network node model, the processing time of ring network protection switching in the optical network is shortened effectively and the processing efficiency of the ring network protection switching of the optical network device is largely improved. The present invention is especially suitable to the field of ring network protection technology, and also can be extended to the field of protection process in other networks which are similar to ring network.

## Claims

1. A protection protocol device for network nodes comprising:
a protection switching protocol unit to perform protection protocol calculation;
a fault information detection unit to detect alarm information generated on both sides of network element nodes;
a protection signaling detection unit to detect a first protection signaling generated on both sides of the network element nodes;
a protection signaling transmission unit to transmit protection signaling to other network element nodes;
a crossing configuration unit to perform service crossing configuration according to state information of a local network element node; and
a protection signaling pre-transmission processing unit which respectively connects with said protection signaling detection unit and said protection signaling transmission unit, wherein said protection signaling pre-transmission processing unit is used to perform a pre-transmission judgment for the first protection signaling received by said protection signaling detection unit, and said protection signaling transmission unit forwards said first protection signaling which needs to be pre-transmitted to other network element nodes; **characterized in that** said first protection signaling which needs to be pre-transmitted is required to meet all the following conditions in meaning time:
the first protection signaling being a valid signaling;
a long/short path identifier indicated in the first protection signaling showing that the path is a long path;
a source node identifier or a destination node identifier indicated in the first protection signaling showing that the source node or the destination node is not the local network element node;
a bridging switching request indicated in the first protection signaling being a valid bridging switching request;
a priority of the bridging switching request indicated in the first protection signaling being higher than that of the bridging switching request indicated in the first protection signaling transmitted by the local network element node in forwarding process.

2. The device of claim 1, wherein, a direction in which the local node sends said first protection signaling in the forwarding process is opposite to a direction in which said first protection signaling is received.

3. A method for processing network node protection switching, comprising the following steps:
A. a local node detecting and receiving (130) a first protection signaling generated on both sides of a network element node;
B. performing (130) pre-transmission judgment for the received first protection signaling, and if said first protection signaling needs to be pre-transmitted, sending (140) the first protection signaling to a protection signaling transmission unit of the local node, and forwarding (140) the first protection signaling to other network element nodes by said protection signaling transmission unit;
C. sending (150) the received first protection signaling to a protection switching protocol unit of the local node to perform protocol calculation, generating (150) state information of the local node and a second protection signaling which needs to be sent by the local node;
D. said second protection signaling being (150) transmitted by said protection signaling transmission unit to other network element nodes, and the state information of the local node being (150) sent to a crossing configuration unit to perform service crossing configuration:
**characterized in that** in said step B, said first protection signaling which needs to be pre-transmitted is required to meet all the following conditions in meaning time:
said first protection signaling being a valid signaling;
a long/short path identifier indicated in said first protection signaling showing that the path is a long path;
a source node identifier or a destination node identifier indicated in said first protection signaling showing that the source node or the destination node is not the local node;
a bridging switching request indicated in said first protection signaling being a valid bridging switching request;
a priority of the bridging switching request indicated in the first protection signaling being higher than that of the bridging switching request indicated in the first protection signaling transmitted by the local node in forwarding process.

4. The method of claim 3, wherein, in said step B, said received first protection signaling is taken as a protection signaling to be sent in a direction opposite to a receiving direction and is forwarded by said protection signaling transmission unit to other network element nodes.

5. A method of claim 3, wherein, the direction in which said local node sends said first protection signaling in the forwarding process is opposite to the direction in which the first protection signaling is received.

## Patentansprüche

1. Schutzprotokollvorrichtung für Netzwerkknoten, aufweisend:
eine Schutzschaltungsprotokolleinheit zur Durchführung einer Schutzprotokollberechnung;
eine Fehlerinformationserkennungseinheit zur Erkennung von Alarminformationen, die auf beiden Seiten von Netzwerkelementknoten erzeugt werden;
eine Schutzsignalisierungserkennungseinheit zur Erkennung einer ersten Schutzsignalisierung, die auf beiden Seiten der Netzwerkelementknoten erzeugt werden;
eine Schutzsignalisierungsübertragungseinheit zur Übertragung einer Schutzsignalisierung an andere Netzwerkelementknoten;
eine Überkreuzungskonfigurationseinheit zur Durchführung einer Dienstüberkreuzungskonfiguration gemäß den Statusinformationen eines lokalen Netzwerkelementknotens; und
eine Schutzsignalisierungsvorübertragungs-Verarbeitungseinheit, die sich jeweils mit der Schutzsignalisierungserkennungseinheit und der Schutzsignalisierungsübertragungseinheit verbindet, wobei die Schutzsignalisierungsvorübertragungs-Verarbeitungseinheit verwendet wird, um eine Vorübertragungseinschätzung für die erste Schutzsignalisierung durchzuführen, die durch die Schutzsignalisierungserkennungseinheit empfangen wird, und wobei die Schutzsignalisierungsübertragungseinheit die erste Schutzsignalisierung, die vorübertragen werden muss, an andere Netzwerkelementknoten weiterleitet;
**dadurch gekennzeichnet, dass** die erste Schutzsignalisierung, die vorübertragen werden muss, gleichzeitig alle der folgenden Bedingungen erfüllen muss:
die erste Schutzsignalisierung ist eine valide Signalisierung;
eine Lang-/Kurzwegkennung, die in der ersten Schutzsignalisierung angegeben ist, zeigt an, dass der Weg ein langer Weg ist;
eine Quellenknotenkennung oder eine Zielknotenkennung, die in der ersten Schutzsignalisierung angegeben ist, zeigt an, dass der Quellenknoten oder der Zielknoten nicht der lokale Netzwerkelementknoten ist;
eine Überbrückungsschaltanforderung, die in der ersten Schutzsignalisierung angegeben ist, ist eine valide Überbrückungsschaltanforderung;
eine Priorität der Überbrückungsschaltanforderung, die in der ersten Schutzsignalisierung angegeben ist, ist höher als die der Überbrückungsschaltanforderung, die in der ersten Schutzsignalisierung, die durch den lokalen Netzwerkelementknoten im Weiterleitungsprozess übertragen wird, angegeben ist.

2. Vorrichtung nach Anspruch 1, wobei eine Richtung, in der der lokale Knoten die erste Schutzsignalisierung im Weiterleitungsprozess sendet, einer Richtung, in der die erste Schutzsignalisierung empfangen wird, entgegengesetzt ist.

3. Verfahren zur Netzwerkknoten-Schutzschaltungsverarbeitung, das die folgenden Schritte umfasst:
A. Erkennen und Empfangen (130) durch einen lokalen Knoten einer ersten Schutzsignalisierung, die auf beiden Seiten eines Netzwerkelementknotens erzeugt wird;
B. Durchführen (130) einer Vorübertragungseinschätzung für die erste Schutzsignalisierung und, wenn die erste Schutzsignalisierung vorübertragen werden muss, Senden (140) der ersten Schutzsignalisierung an eine Schutzsignalisierungsübertragungseinheit des lokalen Knotens, und Weiterleiten (140) der ersten Schutzsignalisierung an andere Netzwerkelementknoten mittels der Schutzsignalisierungsübertragungseinheit;
C. Senden (150) der empfangenen ersten Schutzsignalisierung an eine Schutzschaltungsprotokolleinheit des lokalen Knotens, um eine Protokollberechnung durchzuführen, Erzeugen (150) von Statusinformationen des lokalen Knotens und einer zweiten Schutzsignalisierung, die durch den lokalen Knoten gesendet werden muss;
D. wobei die zweite Schutzsignalisierung durch die Schutzsignalisierungsübertragungseinheit an andere Netzwerkelementknoten übertragen wird (150), und wobei die Statusinformationen des lokalen Knotens an eine Überkreuzungskonfigurationseinheit zur Durchführung einer Dienstüberkreuzungskonfiguration gesendet werden (150);
**dadurch gekennzeichnet, dass** die erste Schutzsignalisierung, die vorübertragen werden muss, in Schritt B gleichzeitig alle der folgenden Bedingungen erfüllen muss:
die erste Schutzsignalisierung ist eine valide Signalisierung;
eine Lang-/Kurzwegkennung, die in der ersten Schutzsignalisierung angegeben ist, zeigt an, dass der Weg ein langer Weg ist;
eine Quellenknotenkennung oder eine Zielknotenkennung, die in der ersten Schutzsignalisierung angegeben ist, zeigt an, dass der Quellenknoten oder der Zielknoten nicht der lokale Knoten ist;
eine Überbrückungsschaltanforderung, die in der ersten Schutzsignalisierung angegeben ist, ist eine valide Überbrückungsschaltanforderung;
eine Priorität der Überbrückungsschaltanforderung, die in der ersten Schutzsignalisierung angegeben ist, ist höher als die der Überbrückungsschaltanforderung, die in der ersten Schutzsignalisierung, die durch den lokalen Knoten im Weiterleitungsprozess übertragen wird, angegeben ist.

4. Verfahren nach Anspruch 3, wobei die empfangene erste Schutzsignalisierung in Schritt B als eine Schutzsignalisierung dient, die in einer Richtung gesendet werden soll, die einer Empfangsrichtung entgegengesetzt ist, und durch die Schutzsignalisierungsübertragungseinheit an andere Netzwerkelementknoten weitergeleitet wird.

5. Verfahren nach Anspruch 3, wobei die Richtung, in der der lokale Knoten die erste Schutzsignalisierung im Weiterleitungsprozess sendet, der Richtung, in der die erste Schutzsignalisierung empfangen wird, entgegengesetzt ist.

## Revendications

1. Dispositif de protocole de protection des noeuds de réseaux, comprenant :
une unité de protocole de commutation de protection pour effectuer le calcul du protocole de protection ;
une unité de détection d'informations de faute pour détecter les informations d'alarme générées des deux côtés des noeuds d'éléments du réseau ;
une unité de détection de signalisation de protection pour détecter une première signalisation de protection générée des deux côtés des noeuds d'éléments du réseau ;
une unité de transmission de signalisation de protection pour transmettre une signalisation de protection à d'autres noeuds d'éléments du réseau ;
une unité de configuration de passage pour effectuer une configuration de passage de service en fonction des informations d'état d'un noeud d'élément du réseau local ; et
une unité de traitement de transmission préalable de signalisation de protection qui se connecte respectivement à ladite unité de détection de signalisation de protection et à ladite unité de transmission de signalisation de protection, dans lequel ladite unité de traitement de transmission préalable de signalisation de protection est utilisée pour effectuer une appréciation avant la transmission concernant la première signalisation de protection reçue par ladite unité de détection de signalisation de protection, et ladite unité de transmission de signalisation de protection achemine ladite première signalisation de protection qui doit être préalablement transmise à d'autres noeuds d'éléments du réseau ;
**caractérisé en ce que**
ladite première signalisation de protection qui doit être préalablement transmise est nécessaire pour répondre à toutes les conditions suivantes en temps utile :
la première signalisation de protection doit être une signalisation valide ;
un identificateur de parcours long ou court indiqué dans la première signalisation de protection doit montrer que le parcours est un parcours long ;
un identifiant de noeud d'origine ou un identifiant de noeud de destination indiqué dans la première signalisation de protection doit montrer que le noeud d'origine ou le noeud de destination n'est pas le noeud d'élément du réseau local ;
une demande de commutation de transition indiquée dans la première signalisation de protection doit être une demande de commutation de transition valide ;
une priorité de la demande de commutation de transition indiquée dans la première signalisation de protection doit être supérieure à celle de la demande de commutation de transition indiquée dans la première signalisation de protection transmise par le noeud d'élément du réseau local au cours du processus d'acheminement.

2. Dispositif selon la revendication 1, dans lequel, une direction dans laquelle le noeud local envoie ladite première signalisation de protection au cours du processus d'acheminement est opposée à une direction dans laquelle ledit premier signal de protection est reçu.

3. Procédé pour traiter la commutation de protection d'un noeud de réseau, comprenant les étapes suivantes :
A. détection et réception (130) par un noeud local d'une première signalisation de protection générée des deux côtés d'un noeud d'élément du réseau ;
B. établissement (130) d'une appréciation avant la transmission concernant la première signalisation de protection reçue, et si ladite première signalisation de protection doit être transmise au préalable, envoi (140) de la première signalisation de protection à une unité de transmission de signalisation de protection du noeud local, et acheminement (140) de la première signalisation de protection à d'autres noeuds d'éléments du réseau par ladite unité de transmission de signalisation de protection ;
C. envoi (150) de la première signalisation de protection reçue à une unité de protocole de commutation de protection du noeud local pour effectuer un calcul de protocole, génération (150) des informations d'état du noeud local et d'une seconde signalisation de protection qui doit être envoyée par le noeud local ;
D. transmission (150) de ladite seconde signalisation de protection par ladite unité de transmission de signalisation de protection à d'autres noeuds d'éléments du réseau, et envoi (150) des informations d'état du noeud local à une unité de configuration de passage pour effectuer une configuration de passage de service ;
**caractérisé en ce que**
dans ladite étape B, ladite première signalisation de protection qui doit être préalablement transmise est nécessaire pour répondre à toutes les conditions suivantes en temps utile ;
ladite première signalisation de protection doit être une signalisation valide ;
un identificateur de parcours long ou court indiqué dans ladite première signalisation de protection doit montrer que le parcours est un parcours long ;
un identifiant de noeud d'origine ou un identifiant de noeud de destination indiqué dans ladite première signalisation de protection doit montrer que le noeud d'origine ou le noeud de destination n'est pas le noeud local ;
une demande de commutation de transition indiquée dans ladite première signalisation de protection doit être une demande de commutation de transition valide ;
une priorité de la demande de commutation de transition indiquée dans la première signalisation de protection doit être supérieure à celle de la demande de commutation de transition indiquée dans la première signalisation de protection transmise par le noeud local au cours du processus d'acheminement.

4. Procédé selon la revendication 3, dans lequel, dans ladite étape B, ladite première signalisation de protection reçue est considérée comme une signalisation de protection à envoyer dans une direction opposée à une direction de réception et est acheminée par ladite unité de transmission de signalisation de protection à d'autres noeuds d'éléments du réseau.

5. Procédé selon la revendication 3, dans lequel, la direction dans laquelle ledit noeud local envoie ladite première signalisation de protection au cours du processus d'acheminement est opposée à la direction dans laquelle la première signalisation de protection est reçue.
